Europäisches Patentamt

European Patent Office

Office européen des brevets

(11) Veröffentlichungsnummer: **0 516 024 A1**

# EUROPÄISCHE PATENTANMELDUNG

(21) Anmeldenummer: **92108804.3**

(22) Anmeldetag: **25.05.92**

(51) Int. Cl.5: **C08J 9/06**

(30) Priorität: **29.05.91 DE 4117649**

(43) Veröffentlichungstag der Anmeldung:
**02.12.92 Patentblatt 92/49**

(84) Benannte Vertragsstaaten:
**AT BE CH DE DK ES FR GB GR IT LI LU MC NL PT SE**

(71) Anmelder: **ERA BESCHICHTUNG GmbH & CO. KG**
**Grosse Brinkstrasse**
**W-3078 Stolzenau(DE)**

(72) Erfinder: **Stirmlinger, Ulrich**
**Gartenhalde 16**
**W- 7900 Ulm(DE)**
Erfinder: **Noack, Holger Dr.**
**Oldenburger Strasse 20**
**W-3070 Nienburg(DE)**
Erfinder: **Limpächer, Peter, Prof. Dr.**
**Sandbergstrasse 19**
**W-7080 Aalen(DE)**
Erfinder: **Lodder, Martin, Dr.**
**Grafen-von-Hova Strasse 17**
**W-3078 Stolzenau(DE)**
Erfinder: **Krause, Michael Dr.**
**Im Rosenwinkel 3**
**W-3078 Stolzenau(DE)**

(74) Vertreter: **Winkler, Andreas, Dr. et al**
**FORRESTER & BOEHMERT**
**Franz-Joseph-Strasse 38**
**W-8000 München 40(DE)**

(54) **Verfahren zur Herstellung einer Schaumfolie aus thermoplastischem Polyurethan sowie damit erhältliches Produkt.**

(57) Verfahren zur Herstellung einer Schaumfolie aus thermoplastischem Polyurethan, wobei das Polyurethan mit einem Treibmittel vermischt und in einer geeigneten Vorrichtung durch die Einwirkung von Wärme kontinuierlich oder diskontinuierlich ausgeformt wird, sowie damit erhältliches Produkt.

EP 0 516 024 A1

Die Erfindung betrifft ein Verfahren zur Herstellung von Schaumfolie aus thermoplastischem Polyurethan sowie ein mit erhältliches Produkt.

Polyurethane entstehen aus der Polyadditionsreaktion von Isocyanaten mit wenigstens zwei NCO-Gruppen und Diolen bzw. Polyolen unter Ausbildung der Urethangruppierung ($R^1$-NH-CO-O-$R^2$). Während als Isocyanat-Komponenten hauptsächlich niedermolekulare Diisocyanate, wie TDI (ein Isomerengemisch aus 2,4- und 2,6 Toluylendiisocyanat), verwendet werden, sind als Diole bzw. Polyole vorwiegend Polyester- und Polyetherpolyole von Bedeutung, d.h. längerkettige, auch verzweigte Verbindungen mit endständigen Hydroxylgruppen. In besonderen Fällen kommen auch niedermolekulare Diamine zur Kettenverlängerung - unter Bildung von Harnstoffderivaten - zum Einsatz.

Zur Herstellung von Polyurethanschäumen werden heute verschiedene Verfahren angewendet:
a) durch die Reaktion von Isocyanat mit Wasser wird CO gebildet, das als Treibgas fungiert (bevorzugt bei der Weichschaumstoffherstellung);
b) durch Zusatz niedrigsiedender Flüssigkeiten wird das exotherm reagierende Gemisch unter Verdampfen des Treibmittels aufgeschäumt (bevorzugt bei der Hartschaumherstellung); und
c) durch Einblasen oder Einschlagen von Luft wird während der Reaktion ein Schaum erzeugt (bevorzugt bei der Herstellung von geschäumten Beschichtungen).

Dabei müssen Treibreaktion und Vernetzungsreaktion durch spezielle Katalyse so aufeinander abgestimmt werden, daß keine der anderen vorwegläuft.

Obwohl es bereits seit den 50er Jahren bekannt ist, thermoplastische Polyurethan-Elastomere herzustellen, die sich durch hohe Zugfestigkeit und Reißdehnung, hohe Flexibilität auch bei tiefen Temperaturen, hohe Dauergebrauchstemperatur, geringe bleibende Verformung bei statischer dynamischer Beanspruchung, günstiges Reibungs- und Verschleißverhalten, hohe Weiterreißfestigkeit, hohes Dämpfungsvermögen, hohe Beständigkeit gegen Öle, Fett und viele Lösungsmittel und energiereiche und UV-Strahlung auszeichnen und frei von Weichmachern sind, ist es bisher noch nicht gelungen, Schaumfolien aus derartigem Material zu gewinnen. Daher war man in Bereichen, in denen in großem Umfang Schaumfolien eingesetzt werden, wie in der Automobilindustrie, darauf angewiesen, die unter Umweltgesichtspunkten bedenklichen Produkte aus Weich-PVC einzusetzen. Ein thermoplastisches Polyurethan, das das PVC hier ersetzen könnte, ist im Stand der Technik nicht bekannt.

Die Erfindung liegt daher die Aufgabe zugrunde, eine neuartige Schaumfolie auf Polyurethan-Basis zu schaffen, die die bisher bekannten Schaumfolien aus Weich-PVC ersetzen kann.

Erfindungsgemäß wird diese Aufgabe bei einem gattunsgemäßen Verfahren durch gelöst, daß das Polyurethan mit einem Treibmittel vermischt und in einer geeigneten Vorrichtung durch die Einwirkung von Wärme kontinuierlich oder diskontinuierlich ausgeformt wird.

Besonders vorteilhaft wird als thermoplastisches Polyurethan ein aliphatisches oder aromatisches Polyurethan auf Polyether-, Polyester-, Polyalkan-, Polyalken- oder Polyalkin-Basis oder ein Gemisch derselben verwendet.

Die Erfindung schlägt, daß als Treibmittel thermisch zersetzbare, anorganische Hydrogencarbonate verwendet werden.

Alternativ dazu können als Treibmittel thermisch zersetzbare, organische, mono-, di- oder polysäurefunktionelle Salze verwendet werden.

Dabei ist es besonders bevorzugt, als Salze Hydrogensalze zu verwenden.

Es ist dabei besonders vorteilhaft, wenn als Treibhilfsmittel anorganische und/oder organische Säuren zugefügt werden.

Weiter wird vorgeschlagen, daß als Treibmittel Azodicarbonamide verwendet werden.

Besonders bevorzugt ist es dabei, Katalysatoren für die Zersetzung der Azodincarbonamide zuzugeben.

Weiterhin wird vorgeschlagen, daß als Treibmittel Sulfohydrazide verwendet werden.

Alternativ können als Treibmittel Sulfonylsemicarbazide verwendet werden.

Erfindungsgemäß wird schließlich noch vorgeschlagen, als Treibmittel Tetrazole zu verwenden.

Bevorzugt ist vorgesehen, daß die Ausformung der Schaumfolie über einen Extruder erfolgt.

Vorteilhafterweise kann das Polyurethan in Form von Granulat und/oder eingesetzt werden.

Weiter wird vorgeschlagen, daß die Schaumfolie nach der Ausformung 15 bis 20 Stunden bei 80 bis 120°C thermisch nachbehandelt wird, um ihr optimales Eigenschaftsniveau zu erreichen. Hierbei findet eine chemische Nachreaktion der Komponenten statt. Die thermische Nachbehandlung ist besonders wichtig für das Rückstellverhalten.

Die Erfindung betrifft darüber hinaus eine nach dem erfindungsgemäßen Verfahren erhältliche Schaumfolie.

Diese zeichnet sich vorzugsweise durch eine Härte von 50 bis 90 Shore A, einer Reißkraft in Längsrichtung von 300 bis 600 N, einer Reißkraft in Querrichtung von 250 bis 500 N, eine Bruchdehnung in Längsrichtung von 1300 bis 1800% und eine Bruchdehnung in Querrichtung von 800 bis 1400% bei einer Stärke von ca. 1,5 mm aus.

Besonders bevorzugt besitzt sie eine Härte von 65 bis 75 Shore A, eine Reißkraft in Längsrichtung von 400 bis 500 N, eine Reißkraft in Querrichtung von 300 bis 450 N, eine Bruchdehnung in Längsrichtung von 1400 bis 1600% und eine Bruchdehnung in Querrichtung von 1100 bis 1300%.

Am bevorzugtesten weist sie schließlich eine Härte von etwa 70 Shore A, eine Reißkraft in Längsrichtung von etwa 460 N, eine Reißkraft in Querrichtung von etwa 360 N, eine Bruchdehnung in Längsrichtung von etwa 1550% und eine Bruchdehnung in Querrichtung von etwa 1200% auf.

Die erfindungsgemäße Schaumfolie ist dabei besonders bevorzugt mit einer einseitig geschlossenen Außenhaut ausgebildet, was insbesondere deren Verarbeitbarkeit im Hinblick auf die obengenannten Weiterverarbeitungsverfahren positiv beeinflußt.

Wie im folgenden noch näher beschrieben wird, hat sich ergeben, daß eine derartige Schaumfolie auf Polyurethan-Basis allen Anforderungen genügt, um als (in vielen Fällen überlegener) Ersatz für Schaumfolien aus Weich-PVC eingesetzt werden zu können. Während die bisher verwendeten Schaumfolien aus Weich-PVC bei der angegebenen Stärke eine Härte von etwa 60 Shore A, eine Reißkraft in Längsrichtung von maximal 200 N, eine Reißkraft in Querrichtung von ebenfalls maximal 200 N, eine Bruchdehnung in Längsrichtung von maximal 300 % und eine Bruchdehnung in Querrichtung von ebenfalls maximal 300 % erreichen, werden alle diese Eigenschaften von der erfindungsgemäßen neuen Schaumfolie auf Polyurethan-Basis weit übertroffen. Darüber hinaus ist die neuartige Schaumfolie alterungsbeständig, warmverformbar, mit verschiedenen Verfahren (unter anderem auch über Prägekalander) prägbar und kaschierbar. Damit stellt sie einen vollwertigen Ersatz für die bisher in der Automobilindustrie verwendeten Schaumfolien aus Weich-PVC dar und ist diesen insbesondere unter Umweltgesichtspunkten weit überlegen, da Schaumstoffe auf Polyurethan-Basis weitgehend recyclierbar sind, bei evtl. Verbrennung keine gesundheitsschädlichen Produkte freisetzen und ohne Weichmacher auskommen.

Weitere Eigenschaften und Vorteile der erfindungsgemäßen Schaumfolie sowie weitere Details zum erfindungsgemäßen Verfahren finden sich in der nachfolgenden Beschreibung einiger Ausführungsbeispiele.

## Beispiel 1

Als Ausgangsverbindung wurde ein Polyether-Polyurethan der Firma Bayer AG, Leverkusen, mit der Bezeichnung Desmopan KA 8550 verwendet. Nach Vortrocknung des Granulats wurde dieses mit 2 Gew-% eines Treibmittels, bestehend aus Natriumhydrogencarbonat und Zitronensäure, vermischt und in einem herkömmlichen Breitschlitzdüsen-Extruder zu einer Schaumfolie mit einer Stärke von ca. 1,5 mm extrudiert, wobei die Temperaturzonen im Extruder ansteigend von etwa 170 bis etwa 220°C gewählt wurden. Das Extrusionsprodukt besaß eine Härte von 65 bis 70 Shore A, eine Reißkraft in Längsrichtung von etwa 380 N, eine Reißkraft in Querrichtung von etwa 300 N, eine Bruchdehnung in Längsrichtung von etwa 1400 % und eine Bruchdehnung in Querrichtung von etwa 1150 %. Eine weitergehende Beurteilung der Folie ergab eine weitgehend regelmäßige Verteilung der Schaumblasen bei etwas unregelmäßiger Blasengröße. Die Verarbeitbarkeit mit der Breitschlitzdüse war gegeben, wenn auch nicht optimal.

## Beispiel 2

Als Ausgangsprodukt wurde ein Polyether-Polyurethan der Firma Elastogran Polyurethan-Elastomere GmbH mit der Bezeichnung Elastolan VP 1175 AW verwendet. Dem vorgetrockneten Granulat wurde etwa 1 Gew-% eines chemischen Treibmittels zugesetzt, das von der Firma Böhringer Ingelheim unter der Bezeichnung Hydroceyrol BH 70 als weißes Zylindergranulat auf PE-Wachs als Trägermaterial und mit ca. 70 % Anteil an einer Kombination aus organischen Säuren und Carbonaten bzw. deren Derivaten vertrieben wird.

Die Verarbeitung erfolgte mit demselben konventionellen Breitschlitzdüsen-Extruder bei in etwa demselben Temperaturprofil wie in Beispiel 1. Die resultierende Schaumfolie zeigte eine sehr gleichmäßige Blasenverteilung bei ebenfalls sehr gleichmäßiger Blasengröße. Die Verarbeitbarkeit des Materials mit dem Extruder war sehr gut. Die Härteprüfung an einer frisch extrudierten Schaumfolie ergab eine mittlere Härte von 71 Shore A. Durch Temperung bzw. nach ca. 6wöchiger Lagerung der Folie bei Raumtemperatur trat eine geringfügige Erhöhung bis zu maximal 73 Shore A auf.

Die Zugversuche wurde - ebenso wie in Beispiel 1 - abweichend von der DIN-Norm 53517 lt. Werksnorm an 50 mm breiten Streifen bei einer Zuggeschwindigkeit bei 100 ml/m vorgenommen. Die freie Länge betrug 20 mm, die Gesamtlänge 140 m. Bei einer Schaumfolie von ca. 1,5 mm Dicke ergab sich dabei eine mittlere Reißkraft in Längsrichtung von etwa 460 N, eine mittlere Reißkraft in Querrichtung von etwa 360 N, eine mittlere Bruchdehnung in Längsrichtung von etwa 1550 % und eine mittlere Bruchdehnung in Querrichtung von etwa 1200 %. Diese Werte charakterisieren eine hervorragende Festigkeit der neuartigen Schaumfolie, die die weiter vorne angegebenen Vergleichswerte von Weich-PVC-Folien bei weitem übertreffen.

**Beispiele 3 bis 11**

Ausgangsprodukte und Treibmittel für diese Versuche sind in der folgenden Tabelle I zusammengestellt. Die Verarbeitung erfolgte in allen Fällen in demselben konventionellen Breitschlitzdüsen-Extruder wie in den Beispielen 1 und 2. Der Temperaturbereich schwankte dabei (je nach Ausgangsmaterial) zwischen 150°C und 300°C.

Alle resultierenden Schaumfolien zeigten eine sehr gleichmäßige Blasenverteilung bei ebenfalls sehr gleichmäßiger Blasengröße. Die Verarbeitbarkeit des Materials war in jedem Fall als gut zu bezeichnen. Die entsprechenden Angaben zu den Materialeigenschaften ergeben sich ebenfalls aus Tabelle I.

Tabelle I

| Bei-spiel | Polyurethan | Treibmittel (Anteil) | Härte (Shore A) | Reißkraft in Längsrichtung (N) | Reißkraft Querrichtung (N) | Bruchdehnung in Längsrichtung (%) | Bruchdehnung in Querrichtung (%) |
|---|---|---|---|---|---|---|---|
| | Handelsübliches Poly-alkan-Polyurethan | Natriumhydrogencarbonat (2 Gew.-%) | 65 | 355 | 450 | 1500% | 1100% |
| | Handelübliches Polyalken-Polyurethan | Ammoniumhydrogentartrat (2 Gew.-%) | 68 | 415 | 490 | 1430% | 1130% |
| | Handelübliches Polyalkin-Polyurethan | Ammoniumoxalat (2,5 Gew.-%) | 71 | 400 | 395 | 1400% | 1160% |
| | Gemisch aus handelsüblichem Polyether-Polyurethan und handelsüblichem Polyalkan-Polyurethan | Natriumhydrogencarbonat (2,5 Gew.-%) + Propionsäure(1,2 Gew.-%) | 67 | 370 | 370 | 1440% | 1200% |
| | Handelsübliches Polyester-Polyurethan | Azodicarbonamid (3,5 Gew.-%) | 69 | 370 | 350 | 1500% | 1180% |
| | Handelsübliches Polyether-Polyurethan | Azodicarbonamid (1,5 Gew.-%) + Zinkoxid (0,15 Gew.-%) | 66 | 385 | 425 | 1460% | 1160% |
| | Handelübliches Polyalken-Polyurethan | Diphenoxydisulfohydroxid (2 Gew.-%) | 65 | 425 | 390 | 1470% | 1100% |

| Beispiel / Polyurethan | Treibmittel (Anteil) | Härte (Shore A) | Reißkraft in Längsrichtung (N) | Reißkraft Querrichtung (N) | Bruchdehnung in Längsrichtung (%) | Bruchdehnung in Querrichtung (%) |
|---|---|---|---|---|---|---|
| 0 Handelsübliches Poly-alkan-Polyurethan | p-Tolusulfonyl-semicarbazit (3,5 Gew.-%) | | 67 | 395 | 365 | 1410%1120% |
| 1 Handels-übliches Poly-ether-Polyurethan | 5-Phenyltetra-zol (1 Gew.-%) | 68 | 420 | 370 | 1450% | 1170% |

Im folgenden werden die Versuche näher beschrieben, die an den beispielhaft hergestellten neuartigen Schaumfolien durchgeführt wurden, um deren Verarbeitbarkeit, insbesondere im Hinblick auf deren Fähigkeit, die zur Zeit verwendeten PVC-Schaumfolien zu ersetzen, zu überprüfen.

Versuch 1:

6

In diesem Versuch wurde zunächst die Warmverformbarkeit der Folien aus Beispiel 1 und 2 überprüft. Dazu wurde eine Folienprobe 100 x 100 mm zwischen zwei runden Aluminiumplatten mit einer Mittelaussparung von 50 mm Durchmesser eingespannt. Die eingespannte Folie wurde zunächst bei Raumtemperatur mit einem abgerundeten Dorn von 10 mm Durchmesser mit einer Vorschubgeschwindigkeit von 10 mm/m belastet. Nach einer Ziehtiefe von 30 mm zeigte die Prüfmaschine eine Kraft von etwa 10 N an. Nach Entlastung verformten sich die Proben spontan zurück. Dies zeigt, daß die neuartigen Schaumfolien auf Polyurethan-Basis bei Raumtemperatur ein hervorragendes elastisches Verhalten zeigen.

Danach wurde um die Folienprobe ein Umluftofen geschoben und die Heizung eingeschaltet. Nach etwa 20 Minuten betrugen sowohl die Raumtemperatur als auch die Umlufttemperatur ca. 120°C. Die Druckkraft war jetzt auf 3 N abgefallen. Die Proben wurden entweder langsam an Luft oder spontan mit kaltem Wasser abgekühlt. Beide Abkühlverfahren ergaben eine stabile hutverförmige Verformung, die gummielastischen Charakter besaß. Bei erneutem Aufheizen der verformten Folie auf 81°C und anschließendem Abkühlen behielten diese ihre Form bei.

Versuch 2:

Folienstücke der in Beispiel 1 und Beispiel 2 hergestellten Schaumfolie wurden den nachfolgend näher beschriebenen Prägeversuchen unterworfen.

Dabei wurde zunächst ein Folienstück mit den Abmessungen 140 x 200 x 1,5 mm auf einem Heizspiegel erwärmt und mit einer kalten Prägewalze geprägt. Die Prägeseite der Schaumfolie wurde jeweils 15 Sekunden auf den vorgeheizten Heizspiegel gelegt, der mit Teflon beschichtet war. Die Folientemperatur betrug für den ersten Versuch 220°C. Für die weiteren Versuche wurde sie in Schritten von jeweils 10°C gesteigert.

Anschließend wurde die Folie vom Heizspiegel genommen und mit der heißeren Seite nach oben in die Prägevorrichtung gelegt und unter die kalte Prägewalze geschoben. Die Prägezeit betrug 30 Sekunden, was einer Prägegeschwindigkeit von etwa 2,5 m/min entspricht. Bei mehrmaliger Wiederholung der Prägeversuche wurde stets eine gleichmäßige Oberfläche erzielt. Um zu erproben, wie wärmeformbeständig die Prägung ist, wurden die geprägten Folienstücke 5 Stunden einer Temperatur von 140°C ausgesetzt. Es konnte keine Veränderung der Prägequalität festgestellt werden. Auch bei Erwärmen der Folie auf 160°C blieb die Prägung in gleicher Qualität erhalten.

Versuch 3:

Versuche zum Heißkaschieren bzw. Verkleben der Schaumfolie mit einer ungeschäumten Deckfolie ergaben ebenfalls gute Festigkeitswerte bei einer Heizkaschierung ab 170°C bzw. Verwendung spezieller Klebstoffe auf Polyurethanbasis. Die so hergestellten Verbundfolien wurden in anschließenden Versuchen, die in ihrer Durchführung Versuch 1 und 2 entsprachen, auf Prägbarkeit und Warmverformbarkeit überprüft. Es ergab sich, daß auch der Folienverbund problemlos prägbar und formbeständig verformbar war. Die durch das Kaschieren erzeugte lederartige Oberflächenstruktur wurde durch die Verarbeitung nicht beeinträchtigt.

Die erfindungsgemäßen Schaumfolien auf Polyurethan-Basis sind zunächst weitgehend farblos und durchsichtig. Es hat sich aber gezeigt, daß durch Zugabe von für die Polyurethan-Ausgangsprodukte üblichen als Bindemittel gefertigten Farbkonzentraten eine gute Farbdeckung erreicht werden kann, die weder durch die Extrusion noch durch evtl. anschließende Weiterverarbeitungsschritte beeinträchtigt wird.

Die in der vorstehenden Beschreibung sowie in den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

**Patentansprüche**

1. Verfahren zur Herstellung einer Schaumfolie aus thermoplastischem Polyurethan, dadurch gekennzeichnet, daß das Polyurethan mit einem Treibmittel vermischt und in einer geeigneten Vorrichtung durch die Einwirkung von Wärme kontinuierlich oder diskontiunierlich ausgeformt wird.

2. Verfahren nach Anspruch 1, dadurch gekennzeichnet, daß als thermoplastisches Polyurethan ein aliphatisches oder aromatisches Polyurethan auf Polyether-, Polyester-, Polyalkan-, Polyalken- oder Polyalkin-Basis oder ein Gemisch derselben verwendet wird.

**3.** Verfahren nach Anspruch 1 oder 2, dadurch gekennzeichnet, daß als Treibmittel thermisch zersetzbare, anorganische Hydrogencarbonate verwendet werden.

**4.** Verfahren nach Anspruch 1 oder 2, dadurch gekennzeichnet, daß als Treibmittel thermisch zersetzbare, organische, mono-, di- oder polysäurefunktionelle Salze verwendet werden.

**5.** Verfahren nach Anspruch 4, dadurch gekennzeichnet, daß als Salze Hydrogensalze verwendet werden.

**6.** Verfahren nach einem der Ansprüche 3 bis 5, dadurch gekennzeichnet, das als Treibhilfsmittel anorganische und/oder organische Säuren zugefügt werden.

**7.** Verfahren nach Anspruch 1 oder 2, dadurch gekennzeichnet, daß als Treibmittel Azodicarbonamide verwendet werden.

**8.** Verfahren nach Anspruch 7, dadurch gekennzeichnet, daß Katalysatoren für die Zersetzung der Azodicarbonamide zugegeben werden.

**9.** Verfahren nach Anspruch 1 oder 2, dadurch gekennzeichnet, daß als Treibmittel Sulfohydrazide verwendet werden.

**10.** Verfahren nach Anspruch 1 oder 2, dadurch gekennzeichnet, daß als Treibmittel Sulfonylsemicarbazide verwendet werden.

**11.** Verfahren nach Anspruch 1 oder 2, dadurch gekennzeichnet, daß als Treibmittel Tetrazole verwendet werden.

**12.** Verfahren nach einem der vorangehenden Ansprüche, dadurch gekennzeichnet, daß die Ausformung der Schaumfolie über einen Extruder erfolgt.

**13.** Verfahren nach einem der vorangehenden Ansprüche, dadurch gekennzeichnet, daß das Polyurethan in Form von Granulat und/oder Pulver eingesetzt wird.

**14.** Verfahren nach einem der vorangehenden Ansprüche, dadurch gekennzeichnet, daß die Schaumfolie nach der Ausformung für 15 bis 20 Stunden bei 80 bis 120°C thermisch nachbehandelt wird.

**15.** Schaumfolie, erhältlich nach einem Verfahren gemäß einem der Ansprüche 1 bis 13.

**16.** Schaumfolie nach Anspruch 15, gekennzeichnet durch eine Härte von 50 bis 90 Shore A, einer Reißkraft in Längsrichtung von 300 bis 600 N, einer Reißkraft in Querrichtung von 250 bis 500 N, eine Bruchdehnung in Längsrichtung von 1300 bis 1800% und eine Bruchdehnung in Querrichtung von 800 bis 1400% bei einer Stärke von ca. 1,5 mm.

**17.** Schaumfolie nach Anspruch 16, dadurch gekennzeichnet, daß sie eine Härte von 65 bis 75 Shore A, eine Reißkraft in Längsrichtung von 400 bis 500 N, eine Reißkraft in Querrichtung von 300 bis 450 N, eine Bruchdehnung in Längsrichtung von 1400 bis 1600% und eine Bruchdehnung in Querrichtung von 1100 bis 1300% besitzt.

**18.** Schaumfolie nach Anspruch 17, dadurch gekennzeichnet, daß sie eine Härte von etwa 70 Shore A, eine Reißkraft in Längsrichtung von etwa 460 N, eine Reißkraft in Querrichtung von etwa 360 N, eine Bruchdehnung in Längsrichtung von etwa 1550% und eine Bruchdehnung in Querrichtung von etwa 1200% besitzt.

**19.** Schaumfolie nach einem der Ansprüche 15 bis 18, gekennzeichnet durch eine einseitig geschlossene Außenhaut.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 810 595 (WOLFF WALSRODE AG)<br><br>* Spalte 1, Zeile 36 - Zeile 50 *<br>* Spalte 8, Zeile 11 - Zeile 63 *<br>* Beispiel 1 *<br>--- | 1-8,12, 13,15,19 | C08J9/06 |
| A | FR-A-2 313 410 (IMPERIAL CHEMICAL INDUSTRIES)<br>* Seite 3, Zeile 3 - Seite 5, Zeile 33 *<br>--- | 1-19 | |
| A | WORLD PATENTS INDEX LATEST<br>Week 8850,<br>Derwent Publications Ltd., London, GB;<br>AN 88-356374<br>& JP-A-63 265 934 (NIPPON TOKUSHU TORYO; HONDA MOTOR IND KK) 2. November 1988<br>* Zusammenfassung *<br>--- | 1-19 | |
| A | WORLD PATENTS INDEX LATEST<br>Week 8943,<br>Derwent Publications Ltd., London, GB;<br>AN 89-312831<br>& JP-A-1 230 616 (KAO CORPORATION) 14. September 1989<br>* Zusammenfassung *<br>--- | 1-19 | **RECHERCHIERTE SACHGEBIETE (Int. Cl.5)**<br><br>C08J |
| A | US-A-3 933 548 (H.M. ANDERSON JR.; C.K. KNISELY)<br>--- | 1-19 | |
| A | FR-A-2 317 284 (CIBA-GEIGY AG)<br><br>----- | 9,10 | |

Der vorliegende Recherchenbericht wurde für alle Patentansprüche erstellt

| Recherchenort | Abschlußdatum der Recherche | Prüfer |
|---|---|---|
| DEN HAAG | 30 JULI 1992 | GOERKE H.R. |